# EUROPEAN PATENT APPLICATION

(11) **EP 4 647 196 A1**
(43) Date of publication of application: **12.11.2025**
(21) Application number: 23923962.7
(22) Date of filing: 20.02.2023
(51) Int. Cl.: B23H 7/02, B23H 7/06

(54) **DEVICE FOR CONTROLLING WIRE ELECTRIC DISCHARGE MACHINING DEVICE AND METHOD FOR CONTROLLING WIRE ELECTRIC DISCHARGE MACHINING DEVICE**

(71) Applicant: FANUC CORPORATION, Oshino-mura Minamitsuru-gun Yamanashi 401-0597 (JP)
(72) Inventor: HASHIMOTO, Taiju, Yamanashi 401-0597 (JP)
(74) Representative: Keil & Schaafhausen Patentanwälte PartGmbB
(86) International application number: PCT/JP2023/006007
(87) International publication number: WO 2024/176306

(57) **Abstract**

The present disclosure relates to a device for controlling a wire electric discharge machining device which executes taper machining. The control device comprises a first storage unit which stores a first machining condition according to a first inclination angle of a wire electrode, a second storage unit which stores a second machining condition according to a second inclination angle of the wire electrode, and a machining condition calculation unit which calculates, from first angle information indicating the first inclination angle, second angle information indicating the second inclination angle, the first machining condition, and the second machining condition, a third machining condition according to a third inclination angle of the wire electrode.

## Description

### TECHNICAL FIELD

The present disclosure relates to a control device for a wire electrical discharge machine (a device for controlling a wire electric discharge machining device) and a control method for a wire electrical discharge machine (a method for controlling a wire electric discharge machining device).

### BACKGROUND ART

In wire electrical discharge machining, when taper machining or cutting in which machining is performed with a wire electrode inclined is conducted, electrical discharge is more likely to be unstable than in the case of machining with the wire electrode maintained vertically. Therefore, it is known that the wire electrode has a high risk of disconnection in the taper machining. A conventional wire electrical discharge machine (for example, JP 2007-083372 A) is provided with machining conditions for taper machining.

### SUMMARY OF THE INVENTION

Such a conventional wire electrical discharge machine takes a long machining time when a workpiece is machined to be tapered because the workpiece is machined under machining conditions for taper machining.

A first aspect of the present disclosure is characterized by a control device for a wire electrical discharge machine for performing electrical discharge machining on a workpiece by generating electrical discharge between a wire electrode and the workpiece while moving the wire electrode relative to the workpiece, the control device including a first storage unit configured to store a first machining condition corresponding to a first inclination angle of the wire electrode, a second storage unit configured to store a second machining condition corresponding to a second inclination angle of the wire electrode, and a machining condition calculation unit configured to calculate a third machining condition corresponding to a third inclination angle of the wire electrode, from first angle information indicating the first inclination angle, second angle information indicating the second inclination angle, the first machining condition, and the second machining condition.

A second aspect of the present disclosure is characterized by a control method for a wire electrical discharge machine for performing electrical discharge machining on a workpiece by generating electrical discharge between a wire electrode and the workpiece while moving the wire electrode relative to the workpiece, the control method including a first storage step of storing a first machining condition corresponding to a first inclination angle of the wire electrode in a first storage unit, a second storage step of storing a second machining condition corresponding to a second inclination angle of the wire electrode in a second storage unit; and a calculation step of calculating a third machining condition corresponding to a third inclination angle of the wire electrode by a machining condition calculation unit, from first angle information indicating the first inclination angle, second angle information indicating the second inclination angle, the first machining condition, and the second machining condition.

### BRIEF DESCRIPTION OF DRAWINGS

[FIG. 1] FIG. 1 is a perspective view illustrating a configuration example of a wire electrical discharge machine according to a first embodiment;
[FIG. 2] FIG. 2 is a diagram illustrating a configuration of a control device illustrated in FIG. 1 and control thereof;
[FIG. 3] FIG. 3 is a flowchart illustrating operations of a machining condition calculation unit of FIG. 2;
[FIG. 4] FIG. 4 is an explanatory diagram of an example of calculating an inclination angle of the wire electrode and machining conditions; and
[FIG. 5] FIG. 5 is a flowchart illustrating operations of a machining condition calculation unit according to a second embodiment.

### DETAILED DESCRIPTION OF THE INVENTION

When performing taper machining, a conventional wire electrical discharge machine sets machining conditions for taper machining based on the maximum inclination angle of a wire electrode, at which electrical discharge is most likely to become unstable. Therefore, even when the inclination angle of the wire electrode is small, machining is performed under the machining conditions for taper machining set at the maximum machining angle, resulting in a long machining time.

### [First Embodiment]

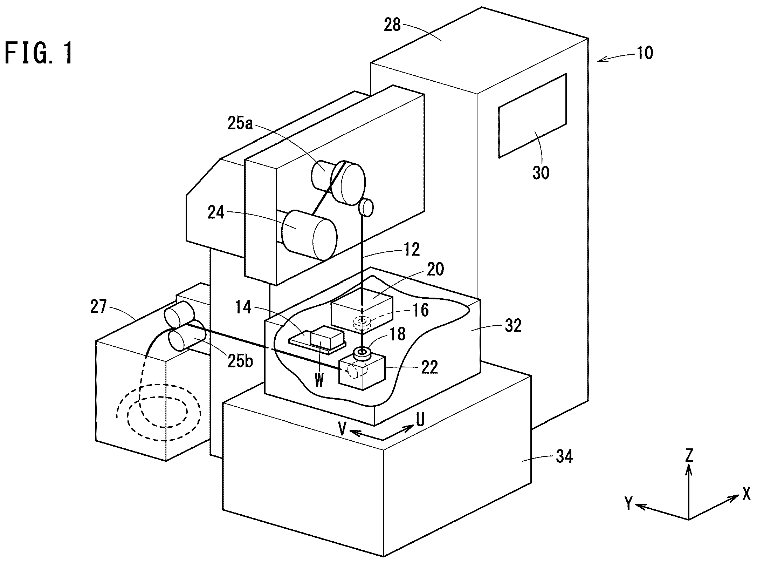

As shown in FIG. 1, by applying a voltage to an inter-electrode gap formed between a wire electrode 12 and a workpiece W to generate an electrical discharge, a wire electrical discharge machine 10 carries out electrical discharge machining on the workpiece W. The wire electrical discharge machine 10 moves the wire electrode 12 relative to the workpiece W along a path designated by a predetermined program. The relative movement between the wire electrode 12 and the workpiece W is performed by causing a stage 14 that supports the workpiece W to be moved in an X direction and a Y direction. The X direction, the Y direction, and a Z direction shown in FIG. 1 are perpendicular to each other, and a -Z direction is the direction of gravity.

The wire electrical discharge machine 10 includes an upper wire guide 16, a lower wire guide 18, an upper guide block 20, and a lower guide block 22. The upper wire guide 16 supports the wire electrode 12 on the upper side (+Z direction side) of the stage 14, and the lower wire guide 18 supports the wire electrode 12 on the lower side (-Z direction side) of the stage 14. The upper wire guide 16 is mounted to the upper guide block 20 and the lower wire guide 18 is mounted to the lower guide block 22. The upper wire guide 16 and the upper guide block 20 move relative to the lower wire guide 18 in a U direction and a V direction. Note that the U direction is the same direction as the X direction, and the V direction is the same direction as the Y direction. The U direction and V direction are used to illustrate the movement of the upper wire guide 16.

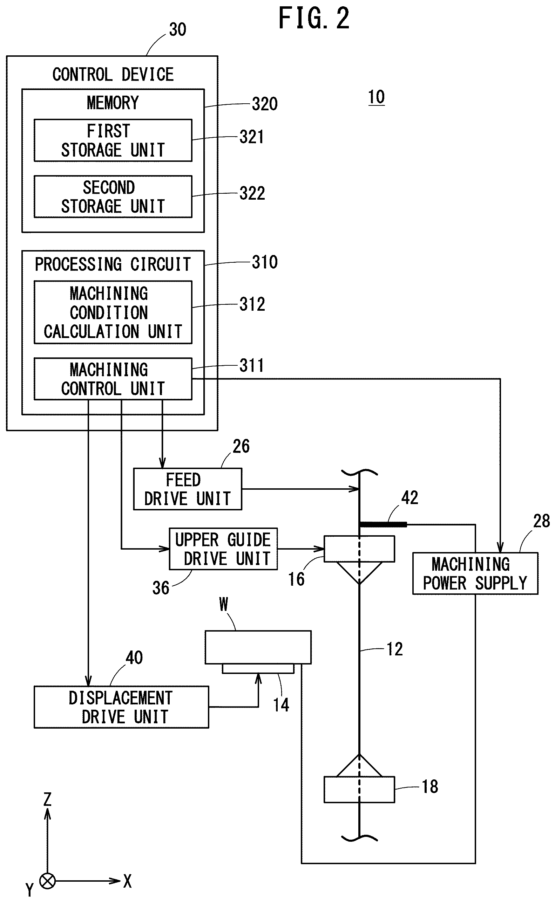

The wire electrode 12 is supplied at a predetermined speed from a wire bobbin 24 in a feed direction. The wire electrode 12 is fed by an upper roller 25a located between the wire bobbin 24 and the upper guide block 20 and a lower roller 25b located between the lower guide block 22 and a wire collection box 27. The upper roller 25a and the lower roller 25b are driven by a feed drive unit 26 in FIG. 2. The feed drive unit 26 includes a motor for rotating the upper roller 25a and a motor for rotating the lower roller 25b. The upper roller 25a and the lower roller 25b generate a predetermined wire tension in the wire electrode 12 by a difference in rotational speed therebetween. The feed drive unit 26 controls the wire tension based on the machining conditions.

Furthermore, the wire electrical discharge machine 10 includes a machining power supply 28, a control device 30 for supplying voltage to an inter-electrode gap, and a work-pan 32, and a bed 34.

The work-pan 32 shown in FIG. 1 may store a working fluid. In this case, the stage 14, the workpiece W, the upper wire guide 16, the upper guide block 20, the lower wire guide 18, and the lower guide block 22 are immersed in the working fluid. The work-pan 32 is installed on the bed 34.

As shown in FIG. 2, the wire electrical discharge machine 10 further includes the feed drive unit 26, an upper guide drive unit 36, a displacement drive unit 40, and an electrode pin 42. The displacement drive unit 40 drives the stage 14 in order to move the wire electrode 12 relative to the workpiece W in the X direction and the Y direction. The displacement drive unit 40 includes a motor (X motor) for moving the stage 14 in the X direction and a motor (Y motor) for moving the stage 14 in the Y direction. The displacement drive unit 40 moves the stage 14 along a path designated by a predetermined machining program. The displacement drive unit 40 controls the move speed of the stage 14 based on a servo gain and a set voltage specified in the machining conditions.

The upper guide drive unit 36 drives the upper guide block 20. The upper guide drive unit 36 moves the upper wire guide 16 relative to the lower wire guide 18 in the U direction and the V direction to tilt the wire electrode 12. The upper guide drive unit 36 includes a motor (U motor) for moving the upper guide block 20 in the U direction and a motor (V motor) for moving the upper guide block 20 in the V direction. Each of the U motor and the V motor is provided with an encoder (a rotational position detection sensor) that detects a rotational position. The detection value of the encoder indicates the amount of movement of the upper wire guide 16. That is, the detection value indicates the relative displacement in the U-V plane between the upper wire guide 16 and the lower wire guide 18. Information on the angle of the wire electrode 12 (third angle information) is obtained by an inverse trigonometric function (arctan) using the detection value of the encoder and the distance between the upper wire guide 16 and the lower wire guide 18 in the Z direction.

As shown in FIG. 2, the electrode pin 42 is in contact with the wire electrode 12. Consequently, the machining power supply 28 can apply a voltage to the electrode pin 42 and to the workpiece W, and as a result, can apply a voltage to the inter-electrode gap. The machining power supply 28 applies a pulse voltage specified by the machining conditions, between the wire electrode 12 and the workpiece W. The machining power supply 28 controls the pause time between the applications of the pulse voltage, based on the machining conditions.

The control device 30 includes a processing circuit 310 and a memory 320 in which a program is stored. By executing the program, the processing circuit 310 functions as the control device 30 of the present embodiment. The control device 30 controls machining of the workpiece W by the wire electrical discharge machine 10. The memory 320 includes a volatile memory such as a RAM or the like, and a nonvolatile memory such as a ROM, a flash memory or the like. The processing circuit 310 includes a processor such as a CPU or the like.

By the processing circuit 310 executing a program, the control device 30 functions as a machining control unit 311 and a machining condition calculation unit 312. At least a portion of the machining control unit 311 and the machining condition calculation unit 312 may be realized by an integrated circuit such as an ASIC or an FPGA.

The machining control unit 311 controls the displacement drive unit 40, the upper guide drive unit 36, the feed drive unit 26, and the machining power supply 28 in accordance with the machining program and the machining conditions. The machining control unit 311 controls the feed drive unit 26 based on the machining conditions, to generate a wire tension specified by the machining conditions in the wire electrode 12. By controlling the displacement drive unit 40 based on the machining program and the machining conditions, the machining control unit 311 moves the wire electrode 12 relative to the workpiece W. By controlling the machining power supply 28 based on the machining conditions, the machining control unit 311 applies a voltage in the inter-electrode gap.

The memory 320 includes a first storage unit 321 and a second storage unit 322. The first storage unit 321 and the second storage unit 322 store the machining conditions. The first storage unit 321 stores first machining conditions corresponding to first angle information of the wire electrode 12, and the second storage unit 322 stores second machining conditions corresponding to second angle information of the wire electrode 12.

The first angle information is, for example, information about the maximum inclination angle (first inclination angle) at which the wire electrode 12 is most inclined to perform taper machining of the workpiece W. That is, the first machining conditions are machining conditions corresponding to the workpiece W to be machined. The inclination angle of the wire electrode 12 is an angle formed between the Z direction and the wire electrode 12. In the present embodiment, the value of the first inclination angle is used as it is as the first angle information. The first angle information is set in advance to, for example, 15 degrees, 30 degrees and the like.

The second angle information is information on a second inclination angle of the wire electrode 12. In the present embodiment, the value of the second inclination angle is used as the second angle information. The second inclination angle is an inclination angle smaller than the first inclination angle, and is set to, for example, 0 degrees. In this case, the second machining conditions are machining conditions in the case where the taper machining is not performed.

The machining conditions such as the first machining conditions and the second machining conditions include setting items such as a pause time of electrical discharging, an applied voltage, a voltage application time, a servo gain, a set voltage, and a wire tension. The pause time of electrical discharging defines a pause time (pulse interval) when the machining power supply 28 applies a discharge voltage (pulse) between the wire electrode 12 and the workpiece W. The voltage application time defines the application time (pulse width) of the discharge voltage (pulse). The applied voltage defines a voltage value (pulse height) of the discharge voltage (pulse). The servo gain defines the responsiveness of the displacement drive unit 40 to the command value. The larger the servo gain is, the better the responsiveness of the displacement drive unit 40 to the command value is. The set voltage is a target value of the voltage during machining, and the smaller the set voltage is, the narrower the gap between the wire electrode 12 and the workpiece W during machining is. The wire tension defines the tension applied to the wire electrode 12. The wire tension is based on, for example, a difference between the rotational speed of the motor of the upper roller 25a and the rotational speed of the motor of the lower roller 25b, of the feed drive unit 26.

The first machining conditions are experimentally determined and set in order that the maximum machining speed is obtained at the first inclination angle within a range in which the electrical discharge of the wire electrode 12 is stable and the wire electrode 12 is not disconnected. The first machining conditions can be set according to the type of the wire electrode 12 and the thickness (dimension in the Z direction) of the workpiece W. Similarly, the second machining conditions are experimentally determined and set in order that the maximum machining speed is obtained at the second inclination angle within a range in which the electrical discharge of the wire electrode 12 is stable and the wire electrode 12 is not disconnected. The second machining conditions can be set according to the type of the wire electrode 12 and the thickness (dimension in the Z direction) of the workpiece W. Since the first inclination angle is larger than the second inclination angle (0 degrees), the machining speed under the first machining conditions is slower than that under the second machining conditions. The machining speed is determined based on the gap voltage between the wire electrode 12 and the workpiece W.

The machining condition calculation unit 312 acquires third angle information about the current inclination angle of the wire electrode 12. The machining condition calculation unit 312 acquires the third angle information from the information of the encoder provided in the upper guide drive unit 36. The machining condition calculation unit 312 calculates third machining conditions corresponding to the third angle information and applies the third machining conditions to the machining control unit 311. In the present embodiment, the machining condition calculation unit 312 calculates the third machining conditions based on the first angle information, the second angle information, the first machining conditions, and the second machining conditions. The third machining conditions realize the machining speed higher than that of the first machining conditions. Since the third machining conditions are calculated based on the current inclination of the wire electrode 12, the machining speed is improved as compared with the case where machining is performed only under the first machining conditions, while preventing disconnection of the wire electrode 12.

The operation of the wire electrical discharge machine 10 will be described below.

When a machining process is started, the machining control unit 311 controls the wire electrical discharge machine 10 to start machining the workpiece W. The wire electrode 12 starts machining the workpiece W from the second inclination angle of 0 degrees. When taper machining is performed, the machining control unit 311 starts machining under the first machining conditions that are initially set. The machining condition calculation unit 312 adjusts the first machining conditions according to the current inclination angle (third inclination angle) of the wire electrode 12.

The machining control unit 311 changes the inclination angle of the wire electrode 12 as the machining proceeds. The machining control unit 311 changes the inclination angle of the wire electrode 12 by displacing the upper wire guide 16. The machining condition calculation unit 312 adjusts the machining conditions of the machining control unit 311 according to the current inclination angle (third inclination angle) of the wire electrode 12. Hereinafter, adjustment of the machining conditions by the machining condition calculation unit 312 will be described.

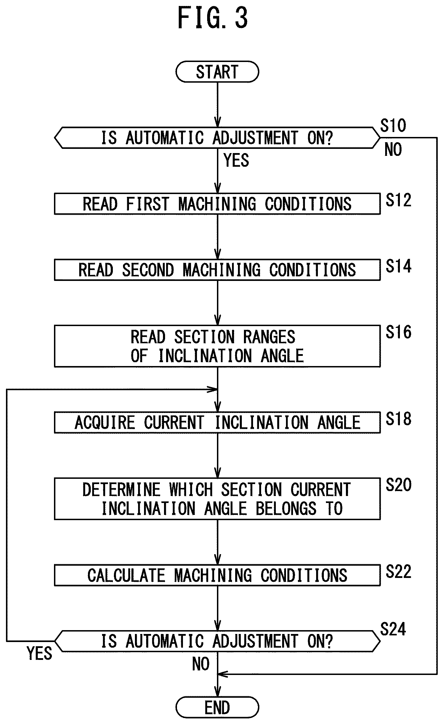

As shown in FIG. 3, when the machining process is started, the process of the machining condition calculation unit 312 proceeds to step S10. In step S10, the machining condition calculation unit 312 determines whether or not the automatic adjustment of the machining conditions is set to ON. In the case where the automatic adjustment of the machining conditions is not set (the automatic adjustment is OFF) (NO in step S10), the machining condition calculation unit 312 terminates the process. In the case where the automatic adjustment is OFF, the machining control unit 311 performs electrical discharge machining according to the first machining conditions.

In the case where the automatic adjustment of the machining conditions is set to ON (YES in step S10), the process proceeds to step S12. In step S12, the machining condition calculation unit 312 reads the first machining conditions together with the first angle information from the first storage unit 321. In the present embodiment, the first angle information is the value of the first inclination angle of the wire electrode 12.

Next, in step S14, the machining condition calculation unit 312 reads the second machining condition together with the second angle information from the second storage unit 322. In the present embodiment, the second angle information is the value of the second inclination angle (0 degrees) of the wire electrode 12, and the second machining conditions are machining conditions in the case where taper machining is not performed.

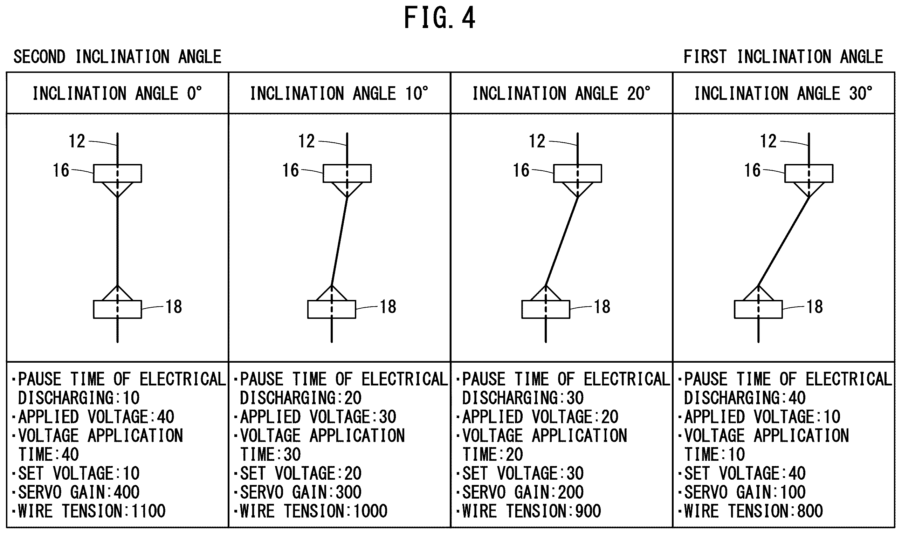

Next, in step S16, the machining condition calculation unit 312 reads, from the memory 320, section ranges of the inclination angle for which the machining conditions are adjusted. The section ranges of the inclination angle are ranges of angles obtained by dividing the inclination angle between the second inclination angle and the first inclination angle into a plurality of angles. The section ranges of the inclination angle may be set as shown in FIG. 4, for example, in the case of the second inclination angle being 30 degrees. In the illustrated example, the section ranges include a first section defined as the inclination angle being more than 0 degrees and less than or equal to 10 degrees (0 degrees < the inclination angle ≤ 10 degrees), a second section defined as the inclination angle being more than 10 degrees and less than or equal to 20 degrees (10 degrees < the inclination angle ≤ 20 degrees), and a third section defined as the inclination angle being more than 20 degrees and less than or equal to 30 degrees (20 degrees < the inclination angle ≤ 30 degrees).

Next, at step S18 in FIG. 3, the machining condition calculation unit 312 acquires third angle information on the current inclination angle of the wire electrode 12. The machining condition calculation unit 312 determines the current inclination angle of the wire electrode 12 from the information of the encoder of the upper guide drive unit 36 and the distance between the upper wire guide 16 and the lower wire guide 18 in the Z direction. The distance between the upper wire guide 16 and the lower wire guide 18 in the Z direction is known.

Next, at step S20, the machining condition calculation unit 312 determines which section range read at step S16 the current inclination angle (third angle information) of the wire electrode 12 obtained at step S18 belongs to.

Next, in step S22, the machining condition calculation unit 312 calculates machining conditions (third machining conditions) corresponding to the third angle information based on the section range that has been determined. The machining control unit 311 performs electrical discharge machining according to the third machining conditions.

Here, the machining condition calculation unit 312 calculates, as the third machining conditions, machining conditions (fourth machining conditions) corresponding to the largest inclination angle in the section to which the third inclination angle detected at the step S18 belongs. The reason why the third machining conditions are calculated for each section is to suppress the frequency of calculation of the third machining conditions and to reduce the processing load of the processing circuit 310. Further, the wire electrode 12 is less likely to be disconnected under the machining conditions corresponding to the larger inclination angle of the wire electrode 12, and therefore the machining conditions corresponding to the largest angle in the section is calculated as the third machining conditions. The machining condition calculation unit 312 may calculate machining conditions corresponding to the current inclination angle as the third machining conditions. In this case, steps S16 and S20 are not necessary.

The machining condition calculation unit 312 obtains machining conditions corresponding to the third angle information based on predetermined relational equations. These relational equations are obtained from the relationship among the first inclination angle, the first machining conditions, the second inclination angle, and the second machining conditions. These relational equations will be described later.

Next, in step S24, the machining condition calculation unit 312 determines whether or not the automatic adjustment is set to ON. In the case where it is determined that the automatic adjustment is set to ON (YES), the process returns to step S18. In the case where it is determined in step S24 that the automatic adjustment is set to OFF (NO), the machining condition calculation unit 312 brings the flow shown in FIG. 3 to an end. In this case, the machining control unit 311 performs electrical discharge machining according to the first machining condition.

Next, relational equations used for calculating the third machining conditions will be described. In the example of FIG. 4, the first machining condition is a machining condition when the first inclination angle is 30 degrees. The first machining conditions include a pause time of electrical discharging of 40, a servo gain of 100, and a wire tension of 800. The second machining conditions are machining conditions when the second inclination angle is 0 degrees. The second machining conditions include a pause time of electrical discharging of 10, a servo gain of 400, and a wire tension of 1100.

The machining condition calculation unit 312 calculates the third machining conditions using the relational equations including the linear polynomial of the inclination angles.

The pause time of electrical discharging of the third machining conditions can be obtained from a following relational equation (1). Pause time of electrical discharging of third machining conditions = (pause time of electrical discharging of the first machining conditions) - A × {(first inclination angle - second inclination angle) - (third inclination angle - second inclination angle)}

In the relational equation (1), a variable number A represents the amount of change in the pause time of electrical discharging per inclination angle of 1 degree. In the example of FIG. 4, the variable number A is 1. When the values of the first inclination angle, the second inclination angle, the pause time of electrical discharging at the first inclination angle, and the variable number A in FIG. 4 are substituted into the relational equation (1), a following equation (2) is obtained. Pause time of electrical discharging of third machining conditions = 40 - 1 × (30 - third inclination angle)

Therefore, the pause time of electrical discharging is 30 when the third inclination angle is 20 degrees, and the pause time of electrical discharging is 20 when the third inclination angle is 10 degrees (see FIG. 4).

The applied voltage of the third processing conditions can be obtained from a following relational equation (3). Applied voltage of third machining conditions = (applied voltage of first machining condition) + B × {(first inclination angle - second inclination angle) - (third inclination angle - second inclination angle)}

In the relational equation (3), a variable number B is the amount of change in the applied voltage per inclination angle of 1 degree, and the variable number B is 1 in the example of FIG. 4. When the values of the first inclination angle, the second inclination angle, the applied voltage at the first inclination angle, and the value of the variable number B in FIG. 4 are substituted into the relational equation (3), a following equation (4) is obtained. Applied voltage of third machining conditions = 10 + 1 × (30 - third inclination angle)

Therefore, the applied voltage is 20 when the third inclination angle is 20 degrees, and the applied voltage is 30 when the third inclination angle is 10 degrees (see FIG. 4).

The voltage application time of the third machining conditions can be obtained from the following relational equation (5). Voltage application time of third machining conditions = (voltage application time of first machining conditions) + C × {(first inclination angle - second inclination angle) - (third inclination angle - second inclination angle)}

In the relational equation (5), a variable number C is the amount of change in the voltage application time per inclination angle of 1 degree, and the variable number C is 1 in the example of FIG. 4. When the values of the first inclination angle, the second inclination angle, the voltage application time at the first inclination angle, and the value of the variable number C in FIG. 4 are substituted into the relational equation (5), a following equation (6) is obtained. Voltage application time of third machining conditions = 10 + 1 × (30 - third inclination angle)

Therefore, when the third inclination angle is 20 degrees, the voltage application time is 20, and when the third inclination angle is 10 degrees, the voltage application time is 30.

The set voltage of the third machining conditions can be obtained from a following relational equation (7). Set voltage of third machining conditions = (set voltage of first machining conditions) - D × {(first inclination angle - second inclination angle) - (third inclination angle - second inclination angle)}

In the relational equation (7), a variable number D is the amount of change in the set voltage per inclination angle of 1 degree, and the variable number D is 1 in the example of FIG. 4. When the values of the first inclination angle, the second inclination angle, the set voltage at the first inclination angle, and the value of the variable number D in FIG. 4 are substituted into the relational equation (7), an equation (8) is obtained. Set voltage of third machining conditions = 40 - 1 × (30 - third inclination angle)

Therefore, when the third inclination angle is 20 degrees, the set voltage is 30, and when the third inclination angle is 10 degrees, the set voltage is 20.

The servo gain of the third machining conditions can be obtained from a following relational equation (9). Servo gain of third machining conditions = (servo gain of first machining conditions) + E × {(first inclination angle - second inclination angle) - (third inclination angle - second inclination angle)}

In the relational equation (9), the variable number E is the amount of change in the servo gain per inclination angle of 1 degree. When the values of the first inclination angle, the second inclination angle, and the servo gain at the first inclination angle in FIG. 4 and the value of the variable number E (10 in FIG. 4) are substituted into the relational equation (9), a following equation is obtained. Servo gain of third machining conditions = 100 + 10 × (30 - third inclination angle)

Therefore, when the third inclination angle is 20 degrees, the servo gain is 200, and when the third inclination angle is 10 degrees, the servo gain is 300 (see FIG. 4).

The wire tension of the third machining conditions can be obtained from a following relational equation (11). Wire tension of third machining conditions = (wire tension of first machining conditions) + F × {(first inclination angle - second inclination angle) - (third inclination angle - second inclination angle)}

In the relational equation (11), a variable number F is the amount of change in the wire tension per inclination angle of 1 degree. When the first inclination angle, the second inclination angle, the wire tension at the first inclination angle, and the value of the variable number F (10 in FIG. 4) in FIG. 4 are substituted into the relational equation (11), a following equation is obtained. Wire tension of third machining conditions = 800 + 10 × (30 - third inclination angle)

Therefore, the wire tension is 900 when the third inclination angle is 20 degrees, and the wire tension is 1000 when the third inclination angle is 10 degrees (see FIG. 4).

According to the relational equations (1) to (12), when the third inclination angle is equal to the second inclination angle, the third machining conditions have the same value as the second machining conditions. Therefore, when the third inclination angle is equal to the second inclination angle, the machining condition calculation unit 312 calculates the second machining conditions as the third machining conditions.

The machining condition calculation unit 312 applies the third machining conditions calculated as described above to the machining conditions of the machining control unit 311. In the example shown in FIG. 4, when the third inclination angle of the wire electrode 12 is 0 degrees, the machining with emphasis on speed is performed under the second machining conditions. In the first section where the third inclination angle is more than 0 degrees and less than or equal to 10 degrees (0 degrees < the inclination angle ≤ 10 degrees), the machining is performed under the machining conditions corresponding to the inclination angle of 10 degrees. Under these machining conditions, the machining speed is higher than that under the first machining conditions and lower than that under the second machining conditions. In the second section where the third inclination angle is more than 10 degrees and less than or equal to 20 degrees (10 degrees < the inclination angle ≤ 20 degrees), the machining is performed under the machining conditions corresponding to the inclination angle of 20 degrees. Under these machining conditions in the second section as well, the machining speed is higher than a machining speed under the first machining conditions, but lower than the machining speed under the machining conditions in the first section. Further, in the section where the inclination angle is more than 20 degrees and less than or equal to 30 degrees (20 degrees < the inclination angle ≤ 30 degrees (first inclination angle)), the machining is performed under the first machining conditions corresponding to the inclination angle of 30 degrees (first inclination angle).

As described above, the control device 30 of the wire electrical discharge machine 10 of the present configuration example can increase the machining speed than that in the conventional technology by adjusting the machining conditions according to the inclination angle of the wire electrode 12. Since it is not necessary to set the machining conditions for each inclination angle of the wire electrode 12, the setting operation of the machining conditions is not required.

In the present embodiment, the section in which the adjustment of the machining conditions is performed is not limited to 10 degrees in the example of FIG. 4, and may be a finer section (for example, 1 degree or less).

### (Modification of First Embodiment)

The present modification relates to another configuration example of the method of calculating the machining conditions according to the third inclination angle by the machining condition calculation unit 312, in step S22 of FIG. 3. In the present modification, the machining conditions are obtained from the ratio of a first angle difference and a second angle difference.

The first angle difference is a value obtained by subtracting the second inclination angle from the first inclination angle. The second angle difference is a value obtained by subtracting the third inclination angle from the first inclination angle. The machining condition calculation unit 312 obtains the second angle difference based on the third inclination angle.

Next, the machining condition calculation unit 312 calculates the machining conditions using a relational equation expressed by a ratio of the first angle difference and the second angle difference. In this case, the pause time of electrical discharging is obtained from a following relational equation (13). Pause time of electrical discharging = pause time of electrical discharging of first machining conditions - G × (second angle difference/first angle difference)

In the relational equation (13), a variable number G is the amount of change in the pause time of electrical discharging with respect to the first angle difference, and is 30 in the example of FIG. 4. The machining condition calculation unit 312 calculates the pause time of electrical discharging by substituting the ratio of the first angle difference and the second angle difference (second angle difference/first angle difference) into the above relational equation.

The applied voltage is obtained from a following relational equation (14). Applied voltage = applied voltage of first machining conditions + H × (second angle difference/first angle difference)

In the relational equation (14), a variable number H is the amount of change in the applied voltage per first angle difference, and is 30 in the example of FIG. 4.

The voltage application time is obtained from a following relational equation (15). Voltage application time = voltage application time of first machining conditions + I × (second angle difference/first angle difference)

In the relational equation (15), the variable number I is the amount of change in the voltage application time per first angle difference, and is 30 in the example of FIG. 4.

The set voltage is obtained by a following relational equation (16). Set voltage = set voltage of first machining conditions + J × (second angle difference/first angle difference)

In the relational equation (16), the variable number J is the amount of change in the set voltage per first angle difference, and is 30 in the case of FIG. 4.

The servo gain is obtained from a following relational equation (17). Servo gain = servo gain of first machining conditions + K × (second angle difference/first angle difference)

In the relational equation (17), a variable number K is the amount of change in the servo gain per first angle difference, and is 300 in the case of FIG. 4.

The wire tension is obtained from a following relational equation (18). Wire tension = wire tension of first machining conditions + L × (second angle difference/first angle difference)

In the relational equation (18), the variable number L is the amount of change in the wire tension per first angle difference, and is 300 in the case of FIG. 4.

The machining condition calculation unit 312 calculates the third machining conditions by substituting the ratio of the first angle difference and the second angle difference (second angle difference/first angle difference) into the above relational equations (13) to (18).

The third machining conditions corresponding to the third inclination angle are obtained by the above processing. According to the machining condition calculation unit 312 of the present modification, the machining speed can be increased as compared with the conventional technology.

According to the wire electrical discharge machine 10 of the first embodiment described above, when performing taper machining, the machining conditions can be adjusted according to the inclination angle of the wire electrode 12. Therefore, the wire electrical discharge machine 10 can perform the taper machining more quickly.

### (Second Embodiment)

The present embodiment relates to another configuration example of adjustment of the machining conditions by the machining condition calculation unit 312. In the present embodiment, the machining condition calculation unit 312 uses the amount of relative movement between the upper guide block 20 and the lower guide block 22 as the angle information on the inclination angle of the wire electrode 12. In the present embodiment, the configuration of each part of the wire electrical discharge machine 10 is not changed, and thus the description of the configuration is omitted.

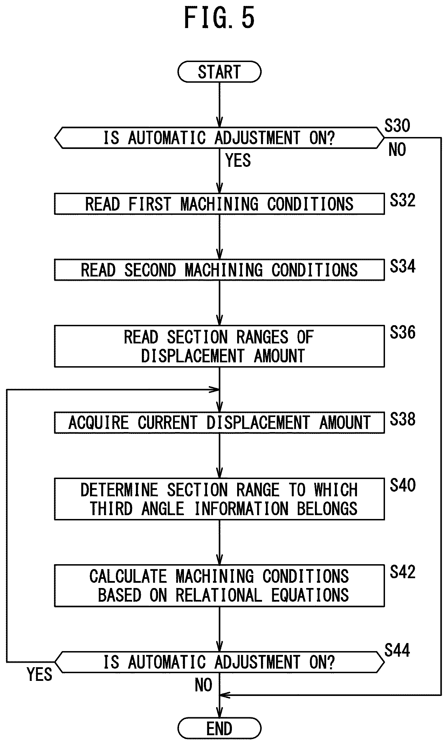

As illustrated in FIG. 5, the machining condition calculation unit 312 determines whether or not the automatic adjustment of the machining conditions is ON in step S30. Step S30 is the same as step S10 of FIG. 3.

In step S32, the machining condition calculation unit 312 reads the first angle information and the first machining conditions from the first storage unit 321. Step S32 is the same as step S12 of FIG. 3. The first angle information of the present embodiment is the displacement amount of the upper guide block 20 (encoder information of the upper guide drive unit 36) corresponding to the maximum inclination angle of the wire electrode 12 in the machining of the workpiece W.

Next, in step S34, the machining condition calculation unit 312 reads the second angle information and the second machining condition from the second storage unit 322. Step S34 is the same as step S14 of FIG. 3. The second angle information of the present embodiment is the displacement amount of the upper guide block 20 (encoder information of the upper guide drive unit 36) corresponding to the inclination angle of 0 degrees of the wire electrode 12.

Next, in step S36, the machining condition calculation unit 312 reads, from the memory 320, section ranges of the angle information (displacement amount) for which the machining conditions are adjusted. The section ranges of the angle information (displacement amount) are ranges obtained by dividing the section between the displacement amount of the upper guide block 20 corresponding to the second angle information and the displacement amount of the upper guide block 20 corresponding to the first angle information, into a plurality of ranges.

Next, in step S38, the machining condition calculation unit 312 acquires the current displacement amount of the upper guide block 20 as the third angle information.

Next, in step S40, the machining condition calculation unit 312 determines a section range to which the third angle information belongs.

Next, in step S42, the machining condition calculation unit 312 calculates the third machining conditions based on the section range to which the third angle information belongs, and applies the third machining conditions to the machining conditions of the machining control unit 311.

The machining condition calculation unit 312 obtains the third machining conditions based on predetermined relational equations. These relational equations are obtained as linear polynomials of the displacement amounts with respect to the machining conditions based on the relationship between the displacement amount corresponding to the first angle information, the displacement amount corresponding to the second angle information, the first machining conditions, and the second machining conditions.

Here, the machining condition calculation unit 312 calculates the machining conditions according to the largest amount of relative movement in the section to which the third angle information belongs. The machining condition calculation unit 312 applies the machining conditions calculated as described above to the machining conditions of the machining control unit 311.

Thereafter, in step S44, the machining condition calculation unit 312 determines whether or not the automatic adjustment is ON. When it is determined that the automatic adjustment is ON (YES), the process returns to step S38. When it is determined in step S44 that the automatic adjustment is OFF (NO), the machining condition calculation unit 312 terminates the process.

The control device 30 of the wire electrical discharge machine 10 according to the second embodiment described above adjusts the machining conditions depending on the amount of relative movement of the upper wire guide 16 and the lower wire guide 18 instead of the inclination angle of the wire electrode 12. That is, the control device 30 can adjust the machining conditions without calculating the inclination angle of the wire electrode 12 from the encoder information of the upper guide block 20. Therefore, in the present embodiment, the process of the machining condition calculation unit 312 can be simplified.

The above-described embodiments may be modified in the following manner. In the following modifications, descriptions that overlap or are duplicative of those stated in the embodiments will be omitted.

The first inclination angle does not have to be the maximum inclination angle in the machining of the workpiece W, and may be any inclination angle of the wire electrode 12. As an example, the first inclination angle may be the maximum inclination angle of the wire electrode 12 that is allowed in the wire electrical discharge machine 10. The second inclination angle is not limited to 0 degrees, and any angle may be adopted. In this case, approximation functions (for example, linear polynomials) that give machining conditions corresponding to an arbitrary inclination angle (third inclination angle) is obtained based on the first inclination angle, the second inclination angle, the first machining conditions, and the second machining conditions, and the third machining conditions are obtained from the approximation functions.

The first inclination angle and the second inclination angle may be the same angle. In this case, the third machining conditions can be obtained by adding or multiplying the first machining conditions at the first inclination angle by a variable number that changes according to the third inclination angle.

The disclosure of the above embodiments enables automatic application of machining conditions that increase the machining speed to an arbitrary inclination angle of the wire electrode 12 in taper machining by the wire electrical discharge machine 10, and contributes to acceleration of taper machining.

With respect to the above embodiment, the following supplementary notes are further disclosed.

### (Supplementary Note 1)

In the control device (30) in accordance with the present disclosure, for the wire electrical discharge machine (10) for performing electrical discharge machining on the workpiece (W) by generating electrical discharge between the wire electrode (12) and the workpiece while moving the wire electrode relative to the workpiece, the control device includes the first storage unit (321) configured to store the first machining condition corresponding to the first inclination angle of the wire electrode, the second storage unit (322) configured to store the second machining condition corresponding to a second inclination angle of the wire electrode, and the machining condition calculation unit (312) configured to calculate the third machining condition corresponding to the third inclination angle of the wire electrode, from the first angle information indicating the first inclination angle, the second angle information indicating the second inclination angle, the first machining condition, and the second machining condition.

### (Supplementary Note 2)

In the control device for the wire electrical discharge machine according to Supplementary Note 1, the machining condition calculation unit may calculate the third machining condition from the first angle information, the second angle information, the first machining condition, and the second machining condition, based on the predetermined relational equation.

### (Supplementary Note 3)

In the control device for the wire electrical discharge machine according to Supplementary Note 2, the machining condition calculation unit may calculate the third machining condition by using the predetermined relational equation using the ratio of the second angle difference to the first angle difference, and the first angle difference may be based on the angle difference information obtained by subtracting the second angle information from the first angle information, and the second angle difference may be based on the angle difference information obtained by subtracting the third angle information from the first angle information.

### (Supplementary Note 4)

In the control device for the wire electrical discharge machine according to any one of Supplementary Notes 1 to 3, the first machining condition may be the machining condition corresponding to the maximum inclination angle of the wire electrode during machining of the workpiece, and the second machining condition may be the machining condition corresponding to the second inclination angle of 0 degrees.

### (Supplementary Note 5)

In the control device for the wire electrical discharge machine according to Supplementary Note 4, the inclination angle of the wire electrode may be divided into a plurality of sections at predetermined angular intervals, and the machining condition calculation unit may calculate the fourth machining condition corresponding to the largest inclination angle in the section to which the third inclination angle belongs.

### (Supplementary Note 6)

In the control device for the wire electrical discharge machine according to any one of Supplementary Notes 1 to 5, the third inclination angle may be more than or equal to the second inclination angle and less than or equal to the first inclination angle.

### (Supplementary Note 7)

In the control device for the wire electrical discharge machine according to any one of Supplementary Notes 1 to 6, the wire electrical discharge machine may include the upper wire guide (16) and the lower wire guide (18) that are configured to support the wire electrode with the workpiece interposed between the upper wire guide and the lower wire guide, and the drive mechanism configured to move the upper wire guide and the lower wire guide relative to each other to incline the wire electrode, and the first angle information and the second angle information each may be information indicating the amount of relative movement between the upper wire guide and the lower wire guide.

### (Supplementary Note 8)

In the control method in accordance with the present disclosure, for the wire electrical discharge machine for performing electrical discharge machining on the workpiece by generating electrical discharge between the wire electrode and the workpiece while moving the wire electrode relative to the workpiece, the control method includes the first storage step of storing the first machining condition corresponding to the first inclination angle of the wire electrode in the first storage unit, the second storage step of storing the second machining condition corresponding to the second inclination angle of the wire electrode in the second storage unit, and the calculation step of calculating the third machining condition corresponding to the third inclination angle of the wire electrode by the machining condition calculation unit, from the first angle information indicating the first inclination angle, the second angle information indicating the second inclination angle, the first machining condition, and the second machining condition.

### (Supplementary Note 9)

In the method for controlling the wire electrical discharge machine according to Supplementary Note 8, the machining condition calculation unit may calculate the third machining condition from the first angle information, the second angle information, the first machining condition, and the second machining condition, based on the predetermined relational equation.

### (Supplementary Note 10)

In the control method for the wire electrical discharge machine according to Supplementary Note 9, the machining condition calculation unit may calculate the third machining condition by using the predetermined relational equation using the ratio of the second angle difference to the first angle difference, and the first angle difference may be based on the angle difference information obtained by subtracting the second angle information from the first angle information, and the second angle difference may be based on the angle difference information obtained by subtracting the third angle information from the first angle information.

### (Supplementary Note 11)

In the control method for the wire electrical discharge machine according to any one of Supplementary Notes 8 to 10, the first machining condition may be the machining condition corresponding to the maximum inclination angle of the wire electrode during machining of the workpiece, and the second machining condition may be the machining condition corresponding to the second inclination angle of 0 degrees.

### (Supplementary Note 12)

In the control method for the wire electrical discharge machine according to Supplementary Note 11, the inclination angle of the wire electrode may be divided into the plurality of sections at predetermined angular intervals, and the machining condition calculation unit may calculate the fourth machining condition corresponding to the largest inclination angle in the section to which the third inclination angle belongs.

### (Supplementary Note 13)

In the control method for the wire electrical discharge machine according to any one of Supplementary Notes 8 to 12, the third inclination angle may be more than or equal to the second inclination angle and less than or equal to the first inclination angle.

### (Supplementary Note 14)

In the control method for the wire electrical discharge machine according to any one of Supplementary Notes 8 to 13, the wire electrical discharge machine may include the upper wire guide and the lower wire guide that are configured to support the wire electrode with the workpiece interposed between the upper wire guide and the lower wire guide, and the drive mechanism configured to move the upper wire guide and the lower wire guide relative to each other to incline the wire electrode, and the first angle information and the second angle information each may be information indicating the amount of relative movement between the upper wire guide and the lower wire guide.

Although the present disclosure has been described in detail, the present disclosure is not limited to each of the embodiments described above. Within a range that does not depart from the essence and gist of the present disclosure, or within a range that does not depart from the purpose of the present disclosure derived from the content described in the claims and their equivalents, various additions, substitutions, changes, partial deletions, or the like can be made to such embodiments. These embodiments may also be implemented in combination. For example, in the embodiments described above, the order of the operations and the order of the processes are shown as examples, and the present invention is not limited to such operations and processes. The same applies to the case where numerical values or mathematical expressions (equations) are used in the description of the above-described embodiments.

### REFERENCE SIGNS LIST

- 10:: wire electrical discharge machine
- 12:: wire electrode
- 16:: upper wire guide
- 18:: lower wire guide
- 30:: control device
- 312:: machining condition calculation unit
- 321:: first storage unit
- 322:: second storage unit

## Claims

1. A control device for a wire electrical discharge machine for performing electrical discharge machining on a workpiece by generating electrical discharge between a wire electrode and the workpiece while moving the wire electrode relative to the workpiece, the control device comprising:
a first storage unit configured to store a first machining condition corresponding to a first inclination angle of the wire electrode;
a second storage unit configured to store a second machining condition corresponding to a second inclination angle of the wire electrode; and
a machining condition calculation unit configured to calculate a third machining condition corresponding to a third inclination angle of the wire electrode, from first angle information indicating the first inclination angle, second angle information indicating the second inclination angle, the first machining condition, and the second machining condition.

2. The control device for the wire electrical discharge machine according to claim 1, wherein the machining condition calculation unit calculates the third machining condition from the first angle information, the second angle information, the first machining condition, and the second machining condition, based on a predetermined relational equation.

3. The control device for the wire electrical discharge machine according to claim 2, wherein the machining condition calculation unit calculates the third machining condition by using the predetermined relational equation using a ratio of a second angle difference to a first angle difference, and
the first angle difference is based on angle difference information obtained by subtracting the second angle information from the first angle information, and the second angle difference is based on angle difference information obtained by subtracting third angle information from the first angle information.

4. The control device for the wire electrical discharge machine according to any one of claims 1 to 3, wherein the first machining condition is a machining condition corresponding to a maximum inclination angle of the wire electrode during machining of the workpiece, and
the second machining condition is a machining condition corresponding to the second inclination angle of 0 degrees.

5. The control device for the wire electrical discharge machine according to claim 4, wherein an inclination angle of the wire electrode is divided into a plurality of sections at predetermined angular intervals, and
the machining condition calculation unit calculates a fourth machining condition corresponding to a largest inclination angle in a section to which the third inclination angle belongs.

6. The control device for the wire electrical discharge machine according to any one of claims 1 to 5, wherein the third inclination angle is more than or equal to the second inclination angle and less than or equal to the first inclination angle.

7. The control device for the wire electrical discharge machine according to any one of claims 1 to 6, wherein the wire electrical discharge machine includes an upper wire guide and a lower wire guide that are configured to support the wire electrode with the workpiece interposed between the upper wire guide and the lower wire guide, and a drive mechanism configured to move the upper wire guide and the lower wire guide relative to each other to incline the wire electrode, and
the first angle information and the second angle information each are information indicating an amount of relative movement between the upper wire guide and the lower wire guide.

8. A control method for a wire electrical discharge machine for performing electrical discharge machining on a workpiece by generating electrical discharge between a wire electrode and the workpiece while moving the wire electrode relative to the workpiece, the control method comprising:
a first storage step of storing a first machining condition corresponding to a first inclination angle of the wire electrode in a first storage unit;
a second storage step of storing a second machining condition corresponding to a second inclination angle of the wire electrode in a second storage unit; and
a calculation step of calculating a third machining condition corresponding to a third inclination angle of the wire electrode by a machining condition calculation unit, from first angle information indicating the first inclination angle, second angle information indicating the second inclination angle, the first machining condition, and the second machining condition.

9. The control method for the wire electrical discharge machine according to claim 8, wherein the machining condition calculation unit calculates the third machining condition from the first angle information, the second angle information, the first machining condition, and the second machining condition, based on a predetermined relational equation.

10. The control method for the wire electrical discharge machine according to claim 9, wherein the machining condition calculation unit calculates the third machining condition by using the predetermined relational equation using a ratio of a second angle difference to a first angle difference, and
the first angle difference is based on angle difference information obtained by subtracting the second angle information from the first angle information, and the second angle difference is based on angle difference information obtained by subtracting third angle information from the first angle information.

11. The control method for the wire electrical discharge machine according to any one of claims 8 to 10, wherein the first machining condition is a machining condition corresponding to a maximum inclination angle of the wire electrode during machining of the workpiece, and
the second machining condition is a machining condition corresponding to the second inclination angle of 0 degrees.

12. The control method for the wire electrical discharge machine according to claim 11, wherein an inclination angle of the wire electrode is divided into a plurality of sections at predetermined angular intervals, and
the machining condition calculation unit calculates a fourth machining condition corresponding to a largest inclination angle in a section to which the third inclination angle belongs.

13. The control method for the wire electrical discharge machine according to any one of claims 8 to 12, wherein the third inclination angle is more than or equal to the second inclination angle and less than or equal to the first inclination angle.

14. The control method for the wire electrical discharge machine according to any one of claims 8 to 13, wherein the wire electrical discharge machine includes an upper wire guide and a lower wire guide that are configured to support the wire electrode with the workpiece interposed between the upper wire guide and the lower wire guide, and a drive mechanism configured to move the upper wire guide and the lower wire guide relative to each other to incline the wire electrode, and
the first angle information and the second angle information each are information indicating an amount of relative movement between the upper wire guide and the lower wire guide.
